# FASCICULE DE BREVET EUROPEEN

(11) **EP 0 575 235 B1**
(45) Date de publication et mention de la délivrance du brevet: **19.04.1995**
(21) Numéro de dépôt: 93401519.9
(22) Date de dépôt: 14.06.1993
(51) Int. Cl.: F02D 9/10

(54) **Organe d'étranglement rotatif pour installation d'alimentation de moteur à combustion interne et corps de papillon en comportant application**
Drosseldrehschieber für die Kraftstoffversorgungsanlage einer Brennkraftmaschine und seine Anwendung in einem Drosselklappengehäuse
Rotary throttle element for a fuel system of an internal combustion engine and its application in a throttle body

(30) Priorité: 17.06.1992 FR 9207351
(43) Date de publication de la demande: 22.12.1993
(73) Titulaire: SOLEX, F-92002 Nanterre Cédex (FR)
(72) Inventeur: Semence, Pierre, F-78400 Chatou (FR)
(74) Mandataire: Fort, Jacques

(56) Documents cités:
- EP-A- 0 113 875
- WO-A-91/13245
- DE-A- 2 615 041
- DE-U- 9 108 326
- GB-A- 1 061 651
- US-A- 2 529 572

## Description

La présente invention a pour objet un organe d'étranglement rotatif pour installation d'alimentation de moteur à combustion interne, comprenant un arbre ayant des portées cylindriques encadrant un tronçon de réception d'un papillon d'étranglement. Elle trouve une application particulièrement importante, bien que non exclusive, dans les corps de papillon destinés aux installations d'injection.

Classiquement, l'organe d'étranglement rotatif d'une installation d'alimentation est constitué d'un arbre et d'un papillon en forme de disque plat, l'un et l'autre en métal ; le papillon est fixé par vis dans une fente ou sur un méplat de l'arbre. La fabrication par usinage et le montage d'un tel organe sont coûteux.

Au surplus, l'expérience a montré que, dans des conditions atmosphériques défavorables, du givre risque de s'accrocher sur les parties métalliques et notamment dans les zones de liaison entre le papillon et l'arbre.

On connaît par ailleurs un organe d'étranglement conforme au préambule de la revendication 1, mais de constitution très complexe, en plusieurs pièces assemblées (DE-U-91 08326).

L'invention vise notamment à fournir un organe d'étranglement rotatif du type ci-dessus défini répondant mieux que ceux antérieurement connus aux exigences de la pratique, notamment par réduction du coût de fabrication et de montage. Dans ce but, l'invention propose un organe d'étranglement rotatif suivant la revendication 1.

Les procédés actuels de moulage permettent de réaliser les composants de l'organe d'étranglement avec un état de surface suffisamment bon pour qu'aucune reprise d'usinage ne soit ensuite nécessaire. Le montage peut s'effectuer de façon très simple, en enfilant l'arbre à travers un boîtier destiné à le recevoir et à travers le papillon préalablement mis en place dans le boîtier. Le papillon peut être fixé ensuite à l'arbre par une opération simple, en général par soudage ultrasonore, alors que le papillon est fermé, donc exactement centré dans le passage destiné à le recevoir.

Le matériau synthétique utilisé sera d'un type résistant à la corrosion par les divers carburants existants ; pour faciliter la fabrication, on utilisera généralement un matériau thermo-plastique ayant un retrait faible. Le matériau thermo-plastique contiendra des charges, généralement de fibre de verre, à une teneur qui sera fréquemment comprise entre 30% et 40% en poids, donnant à l'organe d'étranglement une rigidité évitant les déformations en service.

Parmi les matériaux thermo-plastiques utilisables, on peut notamment citer, à titre non exclusif, divers polyphénilènes sulfones et polyétherimides. Ces matériaux présentent la caractéristique intéressante supplémentaire d'un faible accrochage du givre, donc d'un moindre risque de panne par obturation ou réduction de la section de passage due au givre, ou même de blocage de la commande.

On sait par ailleurs qu'il est possible de réaliser en matière plastique le boîtier d'un corps de papillon d'installation d'alimentation, directement dans l'état définitif, du fait qu'un tel boîtier présente un nombre de passages beaucoup plus réduit que celui d'un carburateur, de sorte que le moulage est possible à l'aide d'un moule de complexité acceptable. L'invention propose également un corps de papillon comprenant un organe d'étranglement rotatif du type ci-dessus et un boîtier en matière synthétique, généralement thermo-plastique, de même nature ou au moins de mêmes caractéristiques (notamment en ce qui concerne le coefficient de dilatation thermique et la tenue à la corrosion par les carburants) que l'organe rotatif. On arrive ainsi à constituer un corps de papillon dont le coût est très nettement inférieur à celui des corps de papillon utilisés à ce jour.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 montre les composants essentiels d'un corps de papillon conforme à un mode particulier de réalisation, en coupe suivant un plan passant par l'axe du passage d'admission et l'axe de l'organe rotatif ;
- la figure 2 est une vue en perspective et en coupe suivant la ligne II-II de la figure 1 ;
- la figure 3 (où le papillon ést représenté en position fermée), est une vue en élévation d'un organe rotatif du genre montré en figure 1 ;
- la figure 4 montre l'arbre de l'organe de la figure 3, en coupe suivant la ligne IV-IV ;
- la figure 5 est une vue du papillon isolé, suivant la ligne V-V de la figure 3.

On décrira maintenant un organe rotatif d'étranglement dans son application à un corps de papillon constitué, comme l'organe rotatif, en matériau thermo-plastique chargé. Mais cette application n'est pas limitative et il est en particulier possible d'utiliser un organe rotatif conforme à l'invention dans un corps de papillon ou un carburateur ayant un boîtier constitué, de façon classique, par une pièce métallique de fonderie usinée.

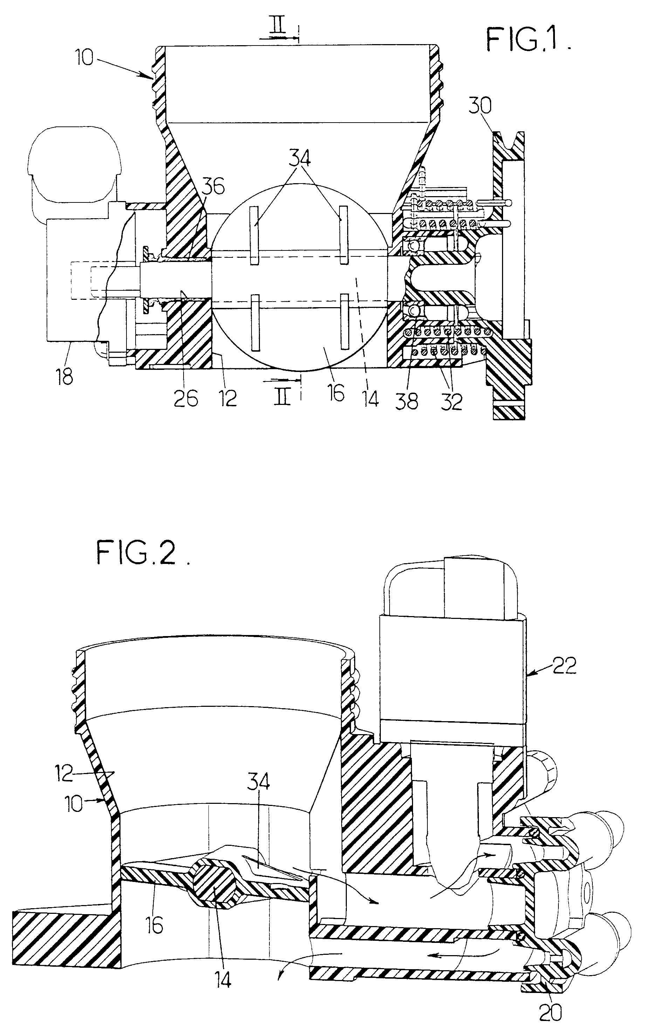

Le corps de papillon dont les constituants principaux sont montrés sur les figures 1 et 2 a une constitution générale comparable à celle décrite dans la demande de brevet français n° 91 05512, déposée le 6 mai 1991 et publiée le 13. Novembre 1992, à laquelle on pourra se reporter. Ce corps de papillon comprend un boîtier 10 délimitant un conduit ou passage d'admission 12. Le conduit est traversé par l'organe rotatif, qui peut être regardé comme formé d'un arbre 14 sur lequel est fixé un papillon 16. L'arbre 14 est relié au curseur d'un potentiomètre 18 destiné à fournir un signal électrique représentatif de la position angulaire du papillon à un circuit de commande d'injection, non représenté. Dans le boîtier sont ménagés, lors du moulage, des conduits d'amenée d'air amont-aval au moteur alors que le papillon 16 est fermé. Un capuchon 20 sépare ces conduits de l'extérieur. Le passage de l'air est commandé par une vanne 22 (par exemple moteur pas à pas, vanne proportionnelle, élément dilatable) fixée sur le boîtier 10.

L'arbre 14 de l'organe d'étranglement, montré en figures 1, 3 et 4, est constitué d'une seule pièce en matériau thermo-plastique chargé, réalisée par moulage directement dans son état définitif. Il peut être regardé comme ayant une tige et une came terminale d'accrochage et d'enroulement d'un câble de commande. Dans le mode de réalisation illustré, cette came constitue également un point d'accrochage de ressort de rappel, comme on le verra plus loin.

La tige présente un tronçon central de réception du papillon 16. Ce tronçon central a une section droite de forme telle qu'elle empêche le volet de tourner. Une solution particulièrement avantageuse consiste à donner à la section droite une forme circulaire avec deux pans coupés parallèles. Si ces pans coupés sont orientés de façon à être parallèles à la direction d'écoulement de l'air lorsque le papillon est en position de pleine ouverture, l'encombrement transversal du papillon, et en conséquence la perte de charge, peuvent être notablement réduits.

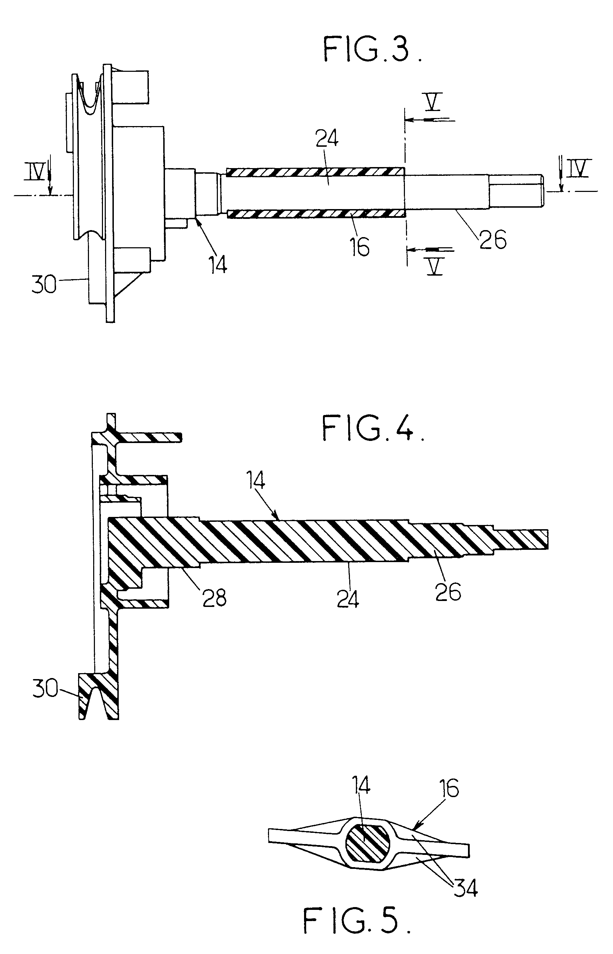

La totalité de la portion de l'arbre située d'un côté du tronçon 24 (la partie droite dans le cas des figures 3 et 4) a une section inférieure à celle du tronçon 24, de façon à permettre d'enfiler le papillon 16 sans difficulté. Plus précisément, la section de la partie terminale doit s'inscrire toute entière dans la section du tronçon 24. Dans le cas illustré sur les figures 3 et 4, la partie terminale de droite comporte une portée cylindrique 26 de diamètre correspondant à la largeur du tronçon 24 entre les pans coupés. L'extrémité présente une forme polygonale permettant de l'accoupler en rotation avec le curseur du potentiomètre.

L'autre partie terminale de l'arbre (à gauche sur les figures 3 et 4) présente une portée 28 dont le rôle apparaîtra plus loin et la came 30, qui peut avoir une forme générale similaire à celle décrite dans la demande de brevet français n° 91 05512, déjà mentionnée. Des trous prévus dans le flasque de la came 30 permettent de loger l'extrémité de ressorts de rappel 32 dont l'autre extrémité est ancrée sur le boîtier 10.

Le papillon 16 présente une forme de disque avec un moyeu central, percé d'un trou de forme correspondant à celle du tronçon 24. Comme le montrent les figures 2 et 5, le moyeu central peut avoir une forme aplatie, réduisant la perte de charge si les pans coupés du tronçon 24 sont orientés de façon à être sensiblement parallèles à la direction d'écoulement en position de pleine ouverture. Le disque du papillon peut être renforcé par des nervures 34.

En règle générale, des bagues anti-friction et/ou des roulements sont interposés entre l'arbre 14 et le boîtier. Dans le mode de réalisation montré en figure 1, une bague 36 placée dans le boîtier reçoit la portée 26. La portée prévue à l'opposé est montée dans un roulement 38. Un montage simple consiste à emmancher à force la bague interne du roulement sur l'arbre jusqu'à ce qu'elle soit en appui contre l'épaulement terminal du tronçon 24, puis à enfiler l'arbre, muni du roulement dont la bague externe est munie d'une rondelle à griffes d'ancrage dans le corps plastique.

La description qui précède montre que l'assemblage du corps de papillon peut s'effectuer de façon très simple. Le papillon est inséré dans le passage 12. L'arbre équipé du roulement 38 est enfilé à travers le boîtier et le papillon et les ressorts sont accrochés. Le papillon est amené en position de fermeture pour qu'il soit correctement centré. Il est appuyé sur une enclume, puis fixé à l'aide d'une double sonotrode appliquée sur les extrémités du moyeu.

## Revendications

1. Organe d'étranglement rotatif pour installation d'alimentation de moteur à combustion interne, comprenant un arbre (14) ayant des portées cylindriques encadrant un tronçon (24) de réception d'un papillon d'étranglement (16) ledit tronçon (24) ayant une section constante non de révolution supérieure à la section de toute la partie de l'arbre située d'un côté du tronçon et le papillon présentant un trou central de section correspondant à celle dudit tronçon, caractérisé en ce que l'arbre est moulé en totalité en matière synthétique, d'une seule pièce avec une came (30) d'accrochage et d'enroulement d'un câble de commande situé de l'autre côté du tronçon, et en ce que le papillon (16) est en matière synthétique chargée.

2. Organe d'étranglement selon la revendication 1, caractérisé en ce que la matière synthétique est thermo-plastique.

3. Organe d'étranglement selon la revendication 1 ou 2, caractérisé en ce que le tronçon (24) a une forme cylindrique à méplats parallèles et en ce que le papillon comporte un moyeu de forme aplatie ayant un trou central à section droite en forme de cercle tronqué parallèlement aux ailes du papillon.

4. Organe d'étranglement selon la revendication 1, 2 ou 3, caractérisé en ce que la portée située du côté de la came présente un diamètre supérieur aux dimensions transversales dudit tronçon (24).

5. Organe selon l'une quelconque des revendications 1 à 4, caractérisé en ce que le papillon (16) est fixé à l'arbre par soudage ultrasonore.

6. Organe selon l'une quelconque des revendications précédentes, caractérisé en ce que le papillon et l'arbre sont constitués en matière thermo-plastique contenant 30 à 40% en poids de charges.

7. Corps de papillon avec un organe d'étranglement rotatif selon l'une quelconque des revendications précédentes, comprenant un boîtier (10) en matière synthétique moulée non usinée présentant deux alésages de réception des portées dudit organe par l'intermédiaire de paliers (38) ou de bagues (36).

## Claims

1. A rotary throttle member for a fuel admission system of an internal combustion engine, comprising a shaft (14) having cylindrical end portions straddling a length (24) receiving a butterfly valve member (16), said length (24) having a constant cross-section which has not a rotational symetry and which is higher than the cross-section of the whole portion of the shaft located on one side of the length and the butterfly valve member having a central opening whose cross-section corresponds to that of said length,
characterized in that the complete shaft is a synthetic matter moulding, integral with a cam (30) for connection with and winding of a control cable located on the other side of the length and in that the butterfly valve member (16) is of loaded synthetic matter.

2. Throttle member according to claim 1, characterized in that the synthetic matter is thermoplastic.

3. Throttle member according to claim 1 or 2, characterized in that the length (24) has a cylindrical shape with parallel flats and in that the butterfly valve member has a hub of flattened shape formed with a central hole whose cross-section is circular with flats parallel to the wings of the butterfly valve member.

4. Throttle member according to claim 1, 2 or 3, characterized in that that end portion which is located on the same side as the cam has a diameter greater than the radial dimensions of said length (24).

5. Throttle member according to any one of claims 1-4, characterized in that the butterfly member (16) is secured to the shaft by ultrasonic welding.

6. Member according to any one of the preceding claims, characterized in that the butterfly member and shaft are made of thermoplastic material containing 30 to 40% by weight of filling.

7. Throttle body assembly with a rotary throttle member according to any one of the preceding claims, comprising a housing (10) of non machined molded synthetic material having two bores receiving the end portions of said member through bearings (38) or rings (36).

## Patentansprüche

1. Drehbares Drosselorgan für die Kraftstoffversorgungsanlage von Brennkraftmaschinen, enthaltend eine Welle mit zylindrischen Sitzen, die einen Abschnitt (24) zur Aufnahme einer Drosselklappe (16) bilden, wobei der Abschnitt (24) einen gleichbleibenden, nicht rotationssymmetrischen Querschnitt hat, der größer als der Querschnitt des auf einer Seite des Abschnitts befindlichen Teils der Welle ist, und die Drosselklappe eine zentrale Bohrung hat, deren Querschnitt demjenigen des Abschnitts entspricht,
dadurch **gekennzeichnet**,
daß die Welle insgesamt aus Kunststoff einstückig mit einem Nocken (30) zum Einhängen oder Aufwickeln eines auf der anderen Seite des Abschnitts gelegenen Steuerseils gegossen ist und daß die Drosselklappe (16) aus gefülltem Kunststoff besteht.

2. Drosselorgan nach Anspruch 1, dadurch gekennzeichnet, daß der Kunststoff thermoplastisch ist.

3. Drosselorgan nach Anspruch 1 oder 2, dadurch gekennzeichnet, daß der Abschnitt (24) eine zylindrische Form mit parallelen Abflachungen hat, und daß die Drosselklappe eine abgeflachte Nabe mit einer zentralen Bohrung hat, die im Querschnitt die Form eines parallel zu den Flügeln der Drosselklappe abgeflachten Kreises hat.

4. Drosselorgan nach Anspruch 1, 2 oder 3, dadurch gekennzeichnet, daß der Durchmesser des auf der Seite des Nockens gelegenen Sitzes größer als die Querschnittsabmessungen des Abschnitts (24) ist.

5. Organ nach einem der Ansprüche 1 bis 4, dadurch gekennzeichnet, daß die Drosselklappe (16) durch Ultraschallschweißung an der Welle befestigt ist.

6. Organ nach einem der vorhergehenden Ansprüche, dadurch gekennzeichnet, daß die Drosselklappe und die Welle aus thermoplastischem Material mit 30 bis 40 Gew.-% Füllstoffen bestehen.

7. Drosselklappenkörper mit einem drehbaren Drosselorgan nach einem der vorhergehenden Ansprüche, enthaltend ein Gehäuse (10) aus gegossenem, unbearbeitetem Kunststoff mit zwei Bohrungen zur Aufnahnme von Sitzen des Organs mittels Lager (38) oder Buchsen (36).
